# EUROPEAN PATENT APPLICATION

(11) **EP 1 726 461 A1**
(43) Date of publication of application: **29.11.2006**
(21) Application number: 05720609.6
(22) Date of filing: 11.03.2005
(51) Int. Cl.: B60H 1/00, B60H 1/08

(54) **AIR CONDITIONER FOR VEHICLE**

(30) Priority: 17.03.2004 JP 2004076013
(71) Applicant: Calsonic Kansei Corporation, Tokyo 164-8602 (JP)
(72) Inventor: NAKAMURA, Kojiro c/o Calsonic Kansei Corporation, Tokyo 164-8602 (JP); IGUCHI, Masahiro c/o Calsonic Kansei Corporation, Tokyo 164-8602 (JP)
(74) Representative: Grünecker, Kinkeldey, Stockmair & Schwanhäusser Anwaltssozietät
(86) International application number: PCT/JP2005/004338
(87) International publication number: WO 2005/087524

(57) **Abstract**

In a controller (117) of an air conditioner for a vehicle using a refrigerant as a heat source, when a temperature of a refrigerant detected by a refrigerant temperature sensor (116) reaches a prescribed value, a normal set quantity of air is sent into a vehicle interior, and when the refrigerant temperature does not reach the prescribed value, the blow of air into the vehicle interior by a blower fan (107) is limited.

## Description

### TECHNICAL FIELD

The present invention relates to an air conditioner for a vehicle, and more particularly, to an air conditioner for a vehicle suitable for electric cars and fuel cell cars (hereinafter, "electric car or the like").

### BACKGROUND ART

Conventional air conditioners for a vehicle, using engine cooling water as a heat source have a problem that the engine cooling water is not sufficiently heated immediately after an engine is started and thus, uncomfortable cool air is adversely sent from a vent until the temperature of the cooling water reaches a predetermined temperature, thereby making a driver or a passenger (hereinafter, "driver or the like") feel uncomfortable.

As a conventional technique for solving this problem, if an engine is started while the temperature of the engine cooling water is low, a small quantity of air is sent into a vehicle interior until predetermined time elapses after starting the engine (Japanese Patent No. 258129).

### DISCLOSURE OF THE INVENTION

In a general engine vehicle, above blower fan control is effective because the cooling water is heated with time once the engine is started. However, in a vehicle such as an electric car or the like that does not have a heat source which uses the engine cooling water, since air conditioner wind is heated by heat of refrigerant, it is difficult to apply the blower fan control.

It is an object of the present invention to provide an air conditioner for a vehicle that appropriately controls air conditioner wind such that a driver or the like does not feel uncomfortable when a temperature of the refrigerant is low.

A first aspect of the present invention provides an air conditioner for a vehicle that blows air heated by a refrigerant as a heat source into a vehicle interior to heat the vehicle interior, the air conditioner for a vehicle including: a refrigerant temperature detector that detects a temperature of the refrigerant (hereinafter, "refrigerant temperature"); and a controller that blows a normal set quantity of air into the vehicle interior when the refrigerant temperature detected by the refrigerant temperature detector reaches a prescribed value and that limits blow of air into the vehicle interior when the refrigerant temperature does not reach the prescribed value.

According to this configuration, when the refrigerant temperature is low, the blow of air into the vehicle interior is limited. Thus, uncomfortable cool air is not sent out as compared with the conventional technique in which air is sent immediately after the air conditioner is actuated.

In a preferred embodiment of the invention, the controller may blow, into the vehicle interior, a small quantity of air determined according to the refrigerant temperature until the refrigerant temperature detected by the refrigerant temperature detector reaches the prescribed value.

According to this configuration, even when the refrigerant temperature is low, a small quantity of air is sent so that the driver or the like does not feel uncomfortable. Therefore, uncomfortable cool air is not sent out as compared with the conventional technique in which air is sent immediately after the air conditioner is actuated, thereby enhancing the rising speed of an interior temperature as compared with the conventional technique in which air sending operation is stopped until the refrigerant temperature reaches a given value.

The controller may blow, into the vehicle interior, a small quantity of air determined according to time elapsed after the air conditioner is actuated until the refrigerant temperature detected by the refrigerant temperature detector reaches the prescribed value.

According to this configuration, even when the refrigerant temperature is low, a small quantity of air is sent so that a driver or the like does not feel uncomfortable. Therefore, uncomfortable cool air is not sent out as compared with the conventional technique in which air is sent immediately after the air conditioner is actuated. Even when the temperature rise of the refrigerant is slow after the air conditioner is actuated, since a small quantity of air is sent after a predetermined time has elapsed, anxiety of a driver or the like that the air conditioner for a vehicle has broken since it does not operate after actuating it, can be removed. The rising speed of an interior temperature can be enhanced as compared with the conventional technique in which air sending operation is stopped until the refrigerant temperature reaches a given value.

The controller may blow, into the vehicle interior, greater one of a small quantity of air determined according to the refrigerant temperature and a small quantity of air determined according to time elapsed after the air conditioner is actuated, until the refrigerant temperature detected by the refrigerant temperature detector reaches the prescribed value.

According to this configuration, even when the refrigerant temperature is low, a small quantity of air is sent so that a driver or the like does not feel uncomfortable. Therefore, uncomfortable cool air is not sent out as compared with the conventional technique in which air is sent immediately after the air conditioner is actuated. Even when the temperature rise of the refrigerant is slow after the air conditioner is actuated, since a small quantity of air is sent after a predetermined time has elapsed, anxiety of a driver or the like that the air conditioner for a vehicle has broken since it does not operate after actuating it, can be removed. Further, since the quantity of air is set to a greater one of a small quantity of air determined according to the refrigerant temperature and a small quantity of air determined according to the elapsed time, it is possible to further enhance the rising speed of the interior temperature.

A second aspect of the invention provides an air conditioner for a vehicle that blows, into a vehicle interior, at least one of air heated by a refrigerant as a heat source and air heated by engine cooling water as the heat source, thereby heating the vehicle interior, the air conditioner for a vehicle including: a refrigerant temperature detector that detects the refrigerant temperature; a cooling water temperature detector that detects a temperature of the cooling water (hereinafter, "cooling water temperature"); and a controller that blows a normal set quantity of air into the vehicle interior when one of the refrigerant temperature detected by the refrigerant temperature detector and the cooling water temperature detected by the cooling water temperature detector reaches a prescribed value, and that, when both of the refrigerant temperature and the cooling water temperature do not reach the prescribed value, limits blow of air into the vehicle interior until one of the refrigerant temperature and the cooling water temperature reaches the prescribed value.

According to this configuration, when the refrigerant temperature and the cooling water temperature are low, the blow of air into the vehicle interior is limited. Thus, uncomfortable cool air is not sent out as compared with the conventional technique in which air is sent immediately after the air conditioner is actuated.

When the cooling water temperature detected by the cooling water temperature detector reaches the prescribed value, the controller may blow the normal set quantity of air into the vehicle interior in a state in which a ratio at which cooling water is used as the heat source is variable. When only the refrigerant temperature detected by the refrigerant temperature detector reaches the prescribed value, the controller may blow the normal set quantity of air into the vehicle interior in a state in which a ratio at which the cooling water is used as the heat source is zero. When both of the cooling water temperature and the refrigerant temperature do not reach the prescribed value, the controller may limit the blow of air into the vehicle interior until either one of the cooling water temperature and the refrigerant temperature reaches the prescribed value.

According to this configuration, when the refrigerant temperature and the cooling water temperature are low, the blow of air into the vehicle interior is limited. Thus, uncomfortable cool air is not sent out as compared with the conventional technique in which air is sent immediately after the air conditioner is actuated. Further, since a mixing ratio is appropriately set according to the cooling water temperature or the refrigerant temperature, it is possible to enhance the rising speed of the interior temperature.

The controller may blow, into the vehicle interior, greater one of a small quantity of air determined according to the refrigerant temperature and a small quantity of air determined according to the cooling water temperature when both of the cooling water temperature detected by the cooling water temperature detector and the refrigerant temperature detected by the refrigerant temperature detector do not reach the prescribed value.

According to this configuration, even when the refrigerant temperature or the cooling water temperature is low, a small quantity of air is sent so that a driver or the like does not feel uncomfortable. Therefore, uncomfortable cool air is not sent out as compared with the conventional technique in which air is sent immediately after the air conditioner is actuated. Further, the quantity of air is set to a greater one of a small quantity of air determined according to the refrigerant temperature and a small quantity of air determined according to the cooling water temperature. Therefore, it is possible to further enhance the rising speed of the interior temperature.

Further, the controller may blow, into the vehicle interior, the greatest one of a small quantity of air determined according to the refrigerant temperature detected by the refrigerant temperature detector, a small quantity of air determined according to the cooling water temperature detected by the cooling water temperature detector, and a small quantity of air determined according to time elapsed after the air conditioner is actuated, when both of the cooling water temperature and the refrigerant temperature do not reach the prescribed value.

According to this configuration, even when the refrigerant temperature or the cooling water temperature is low, a small quantity of air is sent so that a driver or the like does not feel uncomfortable. Therefore, uncomfortable cool air is not sent out as compared with the conventional technique in which air is sent immediately after the air conditioner is actuated. Further, the quantity of air is set to the greatest one of a small quantity of air determined according to the refrigerant temperature, a small quantity of air determined according to the cooling water temperature, and a small quantity of air determined according to the elapsed time after actuation. Therefore, it is possible to further enhance the rising speed of the interior temperature.

According to the above configuration, when the refrigerant temperature is low, it is possible to appropriately control the air conditioner wind so that the driver or the like does not feel uncomfortable.

### BRIEF DESCRIPTION OF THE DRAWINGS

Fig. 1 is a schematic configuration diagram of an air conditioner for a vehicle according to a first embodiment.
Fig. 2 is a flowchart showing a routine of a blower fan control (1) by a controller according to the first embodiment.
Fig. 3 is a flowchart showing a routine of a blower fan control (2) by the controller according to the first embodiment.
Fig. 4 is a graph showing a relation between a refrigerant temperature and a fan speed.
Fig. 5 is a flowchart showing a routine of a blower fan control (3) by the controller according to the first embodiment.
Fig. 6 is a graph showing a relation between elapsed time after actuation of the air conditioner and the fan speed.
Fig. 7 is a flowchart showing a routine of a blower fan control (4) by the controller according to the first embodiment.
Fig. 8 is a schematic configuration diagram of an air conditioner for a vehicle according to a second embodiment.
Fig. 9 is a flowchart showing a routine of a blower fan control (5) by a controller according to the second embodiment.
Fig. 10 is a flowchart showing a routine of a blower fan control (6) by the controller according to the second embodiment.
Fig. 11 is a flowchart showing a routine of a blower fan control (7) by the controller according to the second embodiment.
Fig. 12 is a graph showing a relation between a cooling water temperature and the fan speed.
Fig. 13 is a flowchart showing a routine of a blower fan control (8) by the controller according to the second embodiment.
Fig. 14 is a schematic configuration diagram showing an example of another configuration of the air conditioner for a vehicle to which the blower fan control according to the second embodiment can be applied.

### BEST MODES FOR CARRYING OUT THE INVENTION

Embodiments of an air conditioner for a vehicle according to the present invention will be explained below.

### (First Embodiment)

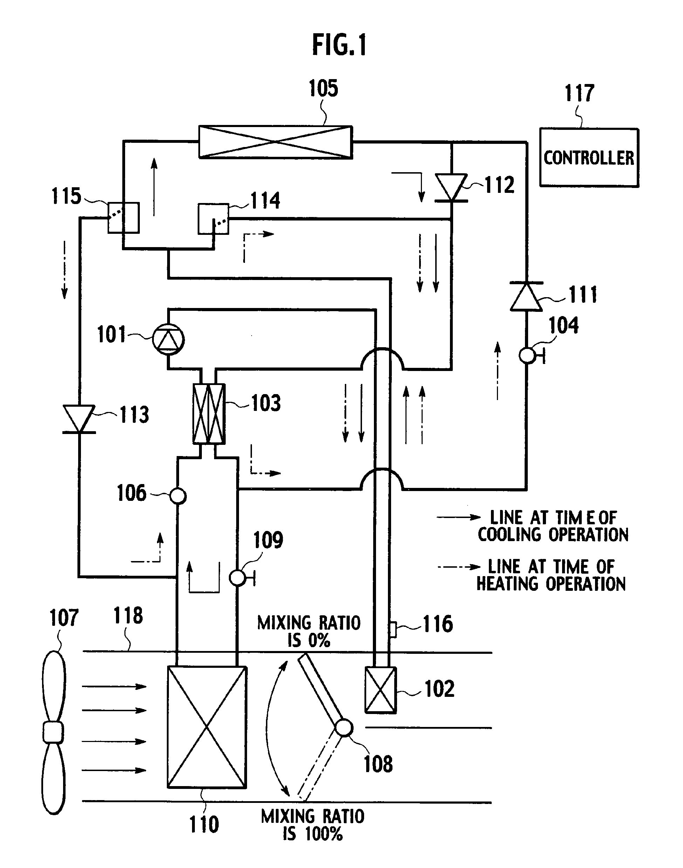

Fig. 1 is a schematic configuration diagram of an air conditioner for a vehicle according to a first embodiment.

An air conditioner for a vehicle which is applied to an electric car or the like, in which refrigerant is used as a heat source will be explained. The air conditioner for a vehicle of the embodiment includes a heating cycle (shown with -·→ in the drawing) which circulates carbon dioxide as the refrigerant to exchange heat between the refrigerant and air.

The heating cycle includes a compressor 101, a sub-heat exchanger 102 (internal heat exchanger 103), an expansion valve 104, an exterior heat exchanger 105, and an accumulator 106 that are communication-connected with one another through pipes in this order, and refrigerant compressed by the compressor 101 is circulated through these members.

The compressor 101 obtains a driving force from a motor (not shown) and compresses gas-phase carbon dioxide, and discharges the compressed carbon dioxide as high-temperature and high-pressure refrigerant.

The sub-heat exchanger 102 is disposed in an air conditioner duct 118, and heats air conditioner wind sent from a blower fan 107 by refrigerant supplied from the compressor 101. An air mix door 108 whose opening degree (mixing ratio) is freely controlled by a controller 117 is provided at a front surface of the sub-heat exchanger 102.

The air mix door 108 is controlled such that when air conditioner wind from the blower fan 107 is heated by the sub-heat exchanger 102, it is turned downward by a predetermined amount (mixing ratio is 0 to 100%) according to a required heating temperature, and when the air conditioner wind is not heated, it is turned upward (mixing ratio is 0%).

A refrigerant temperature sensor 116 that detects the refrigerant temperature is connected to a pipe on the side of an outlet of the sub-heat exchanger 102. The refrigerant temperature sensor 116 can be disposed anywhere at a high-temperature and high-pressure position from a refrigerant discharge port of the compressor 101 to an inlet of the expansion valve 104.

The expansion valve 104 decompresses (expands) and outputs a high-pressure refrigerant sent from the sub-heat exchanger 102 through the internal heat exchanger 103.

The exterior heat exchanger 105 exchanges heat between outside air and low-pressure refrigerant sent from the expansion valve 104, and absorbs the heat.

The accumulator 106 separates refrigerant discharged from the exterior heat exchanger 105 into gas and liquid. Of the gas and the liquid, the accumulator 106 sends only the gas refrigerant to the internal heat exchanger 103, and temporarily stores the liquid refrigerant.

The blower fan 107 generates air conditioner wind of a quantity corresponding to a voltage level instructed from the controller 117, described later.

In the heating cycle having the above configuration, the high-temperature and high-pressure refrigerant compressed by the compressor 101 is sent to the sub-heat exchanger 102, and the air conditioner wind is heated by heat exchange therein. Then, the refrigerant bypasses the exterior heat exchanger 105 and flows into a solenoid valve 114 (a three-way valve 115 is closed), and is sent to the expansion valve 104 through the internal heat exchanger 103. The refrigerant is then decompressed by the expansion valve 104 and its heat is exchanged with (absorbed by) outside air in the exterior heat exchanger 105, and the refrigerant returns to the compressor 101 from the three-way valve 115 through the accumulator 106 and the internal heat exchanger 103.

In addition to the heating cycle, the air conditioner for a vehicle also includes a cooling cycle (→ in the drawings). The compressor 101, the sub-heat exchanger 102, the exterior heat exchanger 105, an expansion valve 109, an interior heat exchanger 110, the accumulator 106, and the internal heat exchanger 103 are connected to one another through pipes in this order in the cooling cycle, so that refrigerant compressed by the compressor 101 is circulated through these members.

The expansion valve 109 decompresses (expands) and outputs high-pressure refrigerant sent from the internal heat exchanger 103.

The internal heat exchanger 103 exchanges heat between refrigerant whose heat is dissipated by the exterior heat exchanger 105 and refrigerant evaporated by the interior heat exchanger 110.

The interior heat exchanger 110 is disposed in the air conditioner duct 118, and cools air conditioner wind blown out from the blower fan 107 by low-temperature and low-pressure refrigerant decompressed (expanded) by the expansion valve 109. If the air conditioner wind from the blower fan 107 passes through the interior heat exchanger 110, heat thereof is exchanged with the refrigerant decompressed by the expansion valve 109, and cool air is supplied into the vehicle interior.

Check valves 111 to 113, the solenoid valve 114, and the three-way valve 115 are connected on a pipe which brings the heating cycle and the cooling cycle into communication with each other.
The controller 117 includes a microcomputer including a CPU, a ROM, and a RAM. The controller 117 receives various pieces of data from various sensors such as the refrigerant temperature sensor 116 and from a timer (not shown) periodically or if necessary, performs computation based on programs of the blower fan controls (1) to (4) stored in the ROM and based on the various pieces of data, switches between the solenoid valve 114 and the three-way valve 115, and controls the quantity (hereinafter, "fan speed") of air of the blower fan 107 and the opening degree of the air mix door 108.

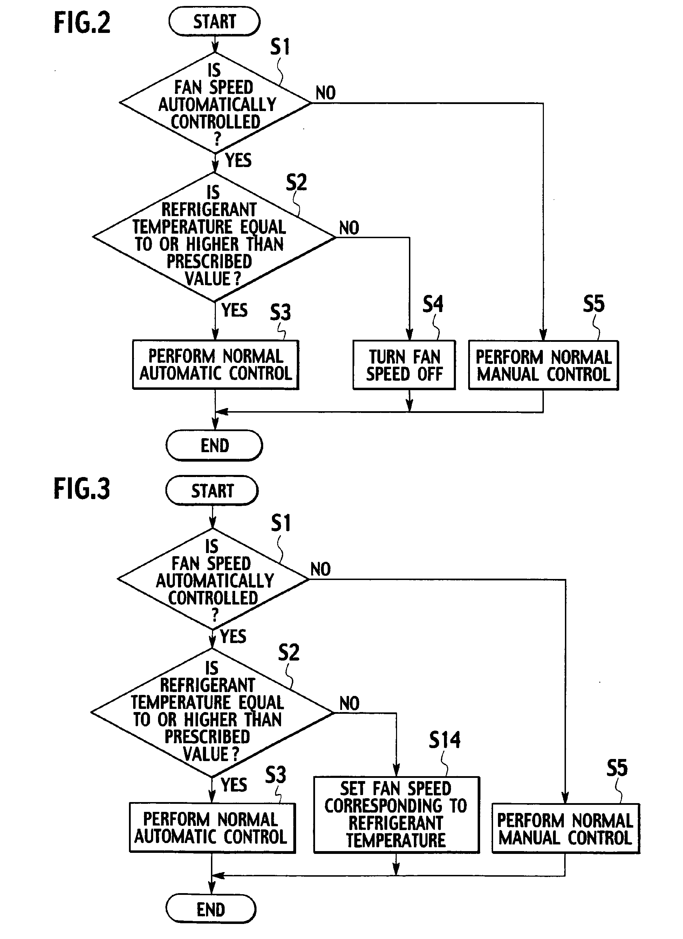

A routine of the blower fan control (1) by the controller 117 will be explained with reference to a flowchart shown in Fig. 2.

The controller 117 starts the routine of the blower fan control (1) as the air conditioner is actuated, and determines whether the fan speed is automatically controlled at step S 1. The automatic control means that the fan speed is optimally set based on a set temperature and a vehicle interior temperature within a refrigerant temperature range higher than a given value.

If the control is not the automatic control at step S 1, the procedure proceeds to step S5 at which the blower fan 107 is controlled at a fan speed of a level instructed by a user. If the control is the automatic control, the procedure proceeds to step S2 at which it is determined whether the refrigerant temperature detected by the refrigerant temperature sensor 116 is equal to or higher than tp3 (prescribed value). If the refrigerant temperature is equal to or higher than the refrigerant temperature tp3, the procedure proceeds to step S3 at which the normal automatic control is carried out. The refrigerant temperature tp3 is a boundary value used for determining whether the blower fan control (1) can be carried out by the routine. Therefore, if the refrigerant temperature exceeds the refrigerant temperature tp3, since air conditioner wind of a temperature at which a driver or the like does not fell uncomfortable is sent, the blower fan 107 is controlled at a fan speed by the normal automatic control. On the other hand, if the refrigerant temperature is lower than the refrigerant temperature tp3 at step S2, the procedure proceeds to step S4, at which the fan speed OFF state is maintained. In this case, uncomfortable cool air is not sent from the vent.

The controller 117 controls the fan speed of the blower fan 107 while proceeding through the steps S 1 to S5.

According to the blower fan control (1), since the fan speed OFF is selected if the refrigerant temperature is low, uncomfortable cool air is not sent out as compared with the conventional technique in which air is sent immediately after the air conditioner is actuated, and the blower fan can be controlled appropriately for a driver or the like on the vehicle.

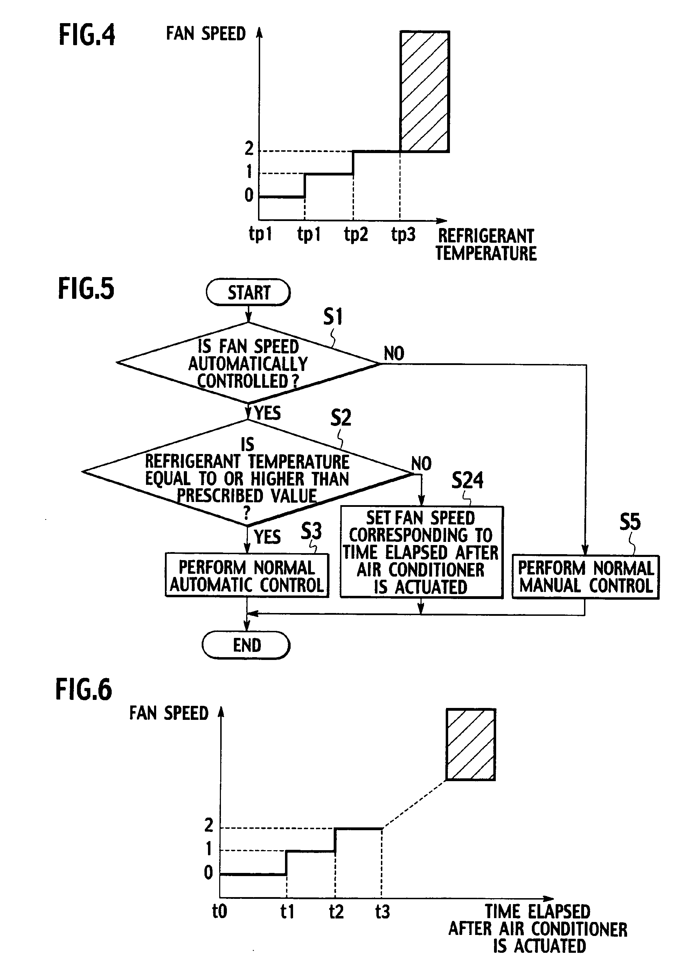

A routine of the blower fan control (2) by the controller 117 will be explained next with reference to a flowchart shown in Fig. 3. Like step numbers denote like processing as those shown in Fig. 2, and explanation thereof will be omitted. Fig. 4 is a graph showing a relation between the refrigerant temperature and the fan speed.

In this routine of the blower fan control (2), if the refrigerant temperature is lower than the prescribed value tp3 at step S2, the procedure proceeds to step S 14, the fan speed corresponding to the refrigerant temperature detected by the refrigerant temperature sensor 116 is obtained from the graph shown in Fig. 4, and the fan speed is set to this value. As shown in Fig. 4, the fan speeds 0 to 2 are set in a range of a small air quantity at which a driver or the like does not feel uncomfortable, and the fan speed is set in stages in a range of refrigerant temperatures tp0 to tp3. That is, the fan speed is set to 0 when the refrigerant temperature is tp0 to lower than tp1, the fan speed is set to 1 when the refrigerant temperature is tp 1 to lower than tp2, and the fan speed is set to 2 when the refrigerant temperature is tp2 to lower than tp3, and the blower fan 107 is controlled such that the fan speed becomes equal to the set value. The hatched region in Fig. 4 shows a region of the fan speed and the refrigerant temperature where the automatic control is carried out.

The controller 117 controls the fan speed of the blower fan 107 while proceeding through the steps S 1 to S 14.

According to the blower fan control (2), even when the refrigerant temperature is low, a small quantity of air is sent so that a driver or the like does not feel uncomfortable. Therefore, uncomfortable cool air is not sent out as compared with the conventional technique in which air is sent immediately after the air conditioner is actuated, which enhances the rising speed of an interior temperature as compared with when air sending operation is stopped until the refrigerant temperature reaches a given value. Therefore, the blower fan can be controlled more appropriately for a driver or the like on the vehicle.

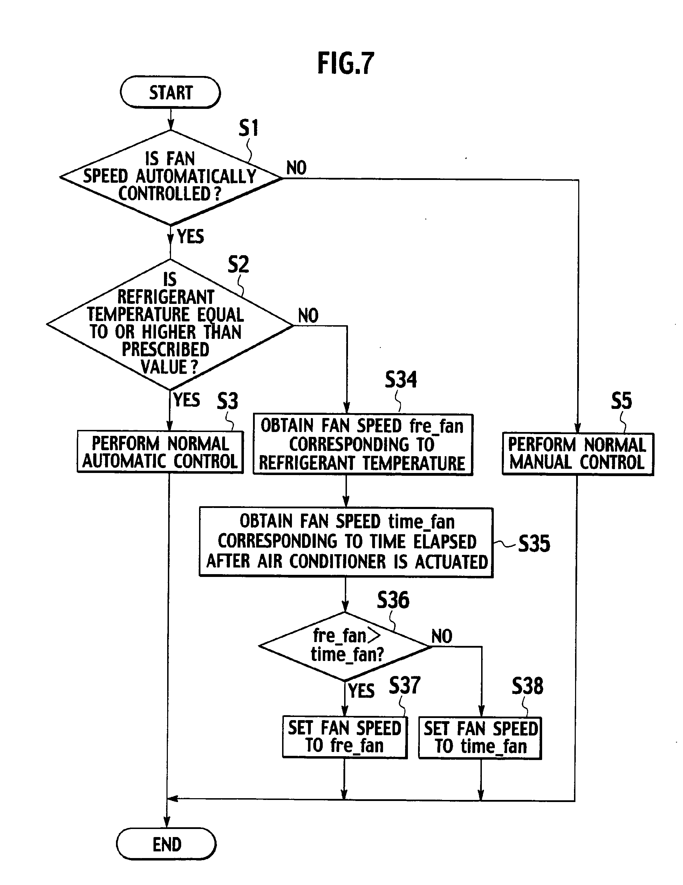

A routine of a blower fan control (3) by the controller 117 will be explained with reference to a flowchart shown in Fig. 5. Like step numbers denote like processing as those shown in Fig. 2, and explanation thereof will be omitted. Fig. 6 is a graph showing a relation between the fan speed and elapsed time after the air conditioner is actuated.

In the routine of the blower fan control (3), if the refrigerant temperature is lower than the prescribed value tp3 at step S2, the procedure proceeds to step S24, at which a fan speed corresponding to elapsed time from the actuation of the air conditioner measured by the timer (not shown) is obtained from the graph shown in Fig. 6, and the fan speed is set to this value. As shown in Fig. 6, the fan speeds 0 to 2 are set in a range of a small air quantity at which a driver or the like does not feel uncomfortable, and the fan speed is set in stages in a range of elapsed time t0 to t3. That is, the fan speed is set to 0 when the elapsed time is t0 to less than t1, the fan speed is set to 1 when the elapsed time is t1 to less than t2, and the fan speed is set to 2 when the elapsed time is t2 or less than t3, and the blower fan 107 is controlled such that the fan speed becomes equal to the set value.

The controller 117 controls the fan speed of the blower fan 107 while proceeding through the steps S 1 to S24.

According to the blower fan control (3), even when the refrigerant temperature is low, a small quantity of air is sent so that a driver or the like does not feel uncomfortable. Therefore, uncomfortable cool air is not sent out as compared with the conventional technique in which air is sent immediately after the air conditioner is actuated. Even when the temperature rise of the refrigerant is slow after the air conditioner is actuated, since a small quantity of air is sent after a predetermined time has elapsed, anxiety of a driver or the like that the air conditioner for a vehicle has broken since it does not operate after actuating it, can be removed. Further, since the rising speed of an interior temperature is enhanced as compared with when air sending operation is stopped until the refrigerant temperature reaches a given value, the blower fan can be controlled more appropriately for a driver or the like on the vehicle.

A routine of the blower fan control (4) by the controller 117 will be explained next with reference to a flowchart shown in Fig. 7. Like step numbers denote like processing as those shown in Fig. 2, and explanation thereof will be omitted.

In the routine of the blower fan control (4), if the refrigerant temperature is lower than the prescribed value tp3 at step S2, the procedure proceeds to step S34, at which a fan speed fre_fan corresponding to the refrigerant temperature detected by the refrigerant temperature sensor 116 is obtained from the graph shown in Fig. 4. The procedure then proceeds to step S35, at which a fan speed time_fan corresponding to elapsed time after the air conditioner is actuated measured by the timer (not shown) is obtained from the graph shown in Fig. 6. The procedure then proceeds to step S36, at which the fan speed fre_fan and the fan speed time_fan are compared with each other to determine which is greater. If the fan speed fre_fan is greater than the fan speed time_fan, the procedure proceeds to step S37, at which the fan speed is set to fre_fan, and the blower fan 107 is controlled such that the fan speed becomes equal to this value. If the fan speed time_fan is greater than the fan speed fre_fan at step S36, the procedure proceeds to step S38, at which the fan speed is set to the time_fan, and the blower fan 107 is controlled such that the fan speed becomes equal to this value.

The controller 117 controls the fan speed of the blower fan 107 while proceeding through the steps S1 to S38.

According to the blower fan control (4), even when the refrigerant temperature is low, a small quantity of air is sent so that a driver or the like does not feel uncomfortable. Therefore, uncomfortable cool air is not sent out as compared with the conventional technique in which air is sent immediately after the air conditioner is actuated. Even when the temperature rise of the refrigerant is slow after the air conditioner is actuated, since a small quantity of air is sent after a predetermined time has elapsed, anxiety of a driver or the like that the air conditioner for a vehicle has broken since it does not operate after actuating it, can be removed. Greater one of the fan speed by the refrigerant temperature and the fan speed by the elapsed time is set as the fan speed. This further enhances the rising speed of the interior temperature and thus, the blower fan can be controlled more appropriately for a driver or the like on the vehicle.

### (Second Embodiment)

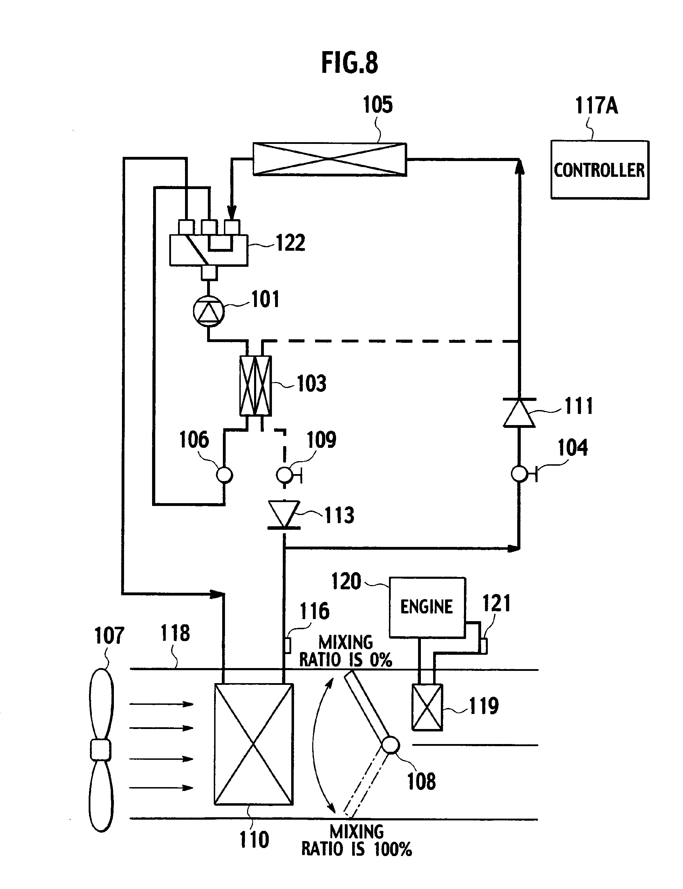

Fig. 8 is a schematic configuration diagram of an air conditioner for a vehicle according to a second embodiment. Like reference signs denote like parts as those shown in Fig. 1, and bold lines shows paths of the heating cycle, and broken lines show paths of the cooling cycle (explanation thereof is omitted).

The air conditioner for a vehicle of this embodiment is applied to an engine vehicle. Engine cooling water, carbon dioxide, and refrigerant are used as heat sources. The configuration of this embodiment can be applied to R134a refrigerant. In this case, the internal heat exchanger 103 is not a fundamental element.

According to the air conditioner for a vehicle of this embodiment, a heater core 119 is disposed in the air conditioner duct 118, and engine cooling water flowing through a cooling passage of an engine 120 is circulated through a pipe. The heater core 119 heats the air conditioner wind sent out from the blower fan 107 by the engine cooling water. A water temperature sensor 121 that detects the temperature of the engine cooling water (hereinafter, "cooling water temperature") is connected to a pipe of the engine cooling water.

The air mix door 108 is controlled such that when air conditioner wind from the blower fan 107 is heated by the heater core 119, it is turned downward by a predetermined amount (mixing ratio is 0 to 100%) according to a required heating temperature, and when the air conditioner wind is not heated, it is turned upward (mixing ratio is 0%). That is, the mixing ratio is controlled in a range of 0 to 100% as a ratio at which the engine cooling water is used as the heat source.

The connection between the compressor 101, the exterior heat exchanger 105, the internal heat exchanger 103, and the interior heat exchanger 110 is switched by a four-way valve 122.

In the heating cycle having the above configuration, high-temperature and high-pressure refrigerant compressed by the compressor 101 is sent to the interior heat exchanger 110 from the four-way valve 122, and the air conditioner wind is heated there by the heat exchange. At the same time, the air conditioner wind is heated if necessary in the heater core 119 located downstream from the interior heat exchanger 110. The refrigerant is decompressed by the expansion valve 104 and then, heat of the refrigerant is exchanged with (absorbed by) outside air by the exterior heat exchanger 105, and the refrigerant returns to the compressor 101 through the four-way valve 122, the accumulator 106, and the internal heat exchanger 103.

A controller 117A of this embodiment includes a microcomputer including a CPU, a ROM, and a RAM. The controller 117A receives various pieces of data from various sensors such as the refrigerant temperature sensor 116 and the water temperature sensor 121 and from a timer (not shown) periodically or if necessary, performs computation based on programs of the blower fan controls (5) to (8) stored in the ROM and based on the various pieces of data, switches the four-way valve 122, and controls the fan speed of the blower fan 107 and the opening degree of the air mix door 108.

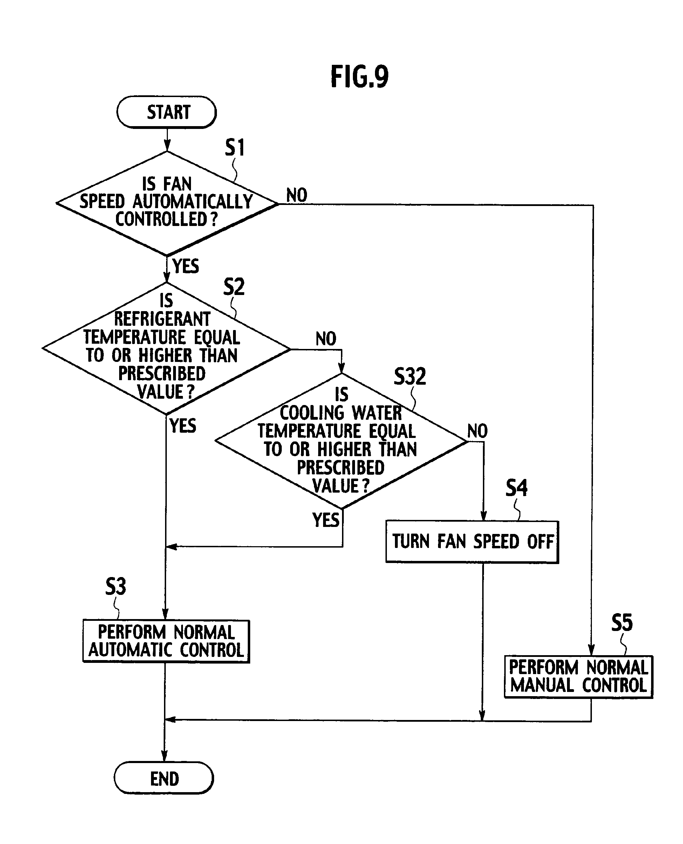

A routine of the blower fan control (5) by the controller 117A will be explained with reference to a flowchart shown in Fig. 9. Here, like step numbers denote like processing as those of the first embodiment, and explanation thereof will be omitted.

The controller 117A starts a routine of the blower fan control (5) as the engine and the air conditioner are started (hereinafter, "system startup"). First, at step S1, the controller 117A determines whether the fan speed is automatically controlled. If the fan speed is not automatically controlled, the procedure proceeds to step S5, at which the blower fan 107 is controlled at a fan speed of a level instructed by a user. If the fan speed is automatically controlled, the procedure proceeds to step S2, at which it is determined whether the refrigerant temperature detected by the refrigerant temperature sensor 116 is equal to or higher than tp3 (prescribed value). If the refrigerant temperature is equal to or higher than the refrigerant temperature tp3, the procedure proceeds to step S3, at which the normal automatic control is carried out. If the refrigerant temperature is equal to or higher than the refrigerant temperature tp3, since the air conditioner wind of a temperature that is not uncomfortable to a driver or the like is sent, the blower fan 107 is controlled at a fan speed of the normal automatic control. If the refrigerant temperature is lower than the refrigerant temperature tp3 at step S2, the procedure proceeds to step S32, at which it is determined whether the cooling water temperature detected by the water temperature sensor 121 is equal to or higher than tp3' (prescribed value). If the cooling water temperature is equal to or higher than the cooling water temperature tp3', the procedure proceeds to step S3, at which the normal automatic control is carried out. If the cooling water temperature is equal to or higher than the cooling water temperature tp3', since the air conditioner wind of a temperature that is not uncomfortable to a driver or the like is sent, the blower fan 107 is controlled at a fan speed of the normal automatic control. If the cooling water temperature is lower than the cooling water temperature tp3' at step S32, the procedure proceeds to step S4, at which the fan speed OFF state is maintained. In this case, uncomfortable cool air is not sent from the vent.

The controller 117A controls the fan speed of the blower fan 107 while proceeding through the steps S 1 to S32.

According to the blower fan control (5), since the fan speed OFF is selected when the refrigerant temperature and the cooling water temperature are low, uncomfortable cool air is not sent out as compared with the conventional technique in which air is sent immediately after the air conditioner is actuated and thus, the blower fan can be controlled appropriately for a driver or the like on the vehicle.

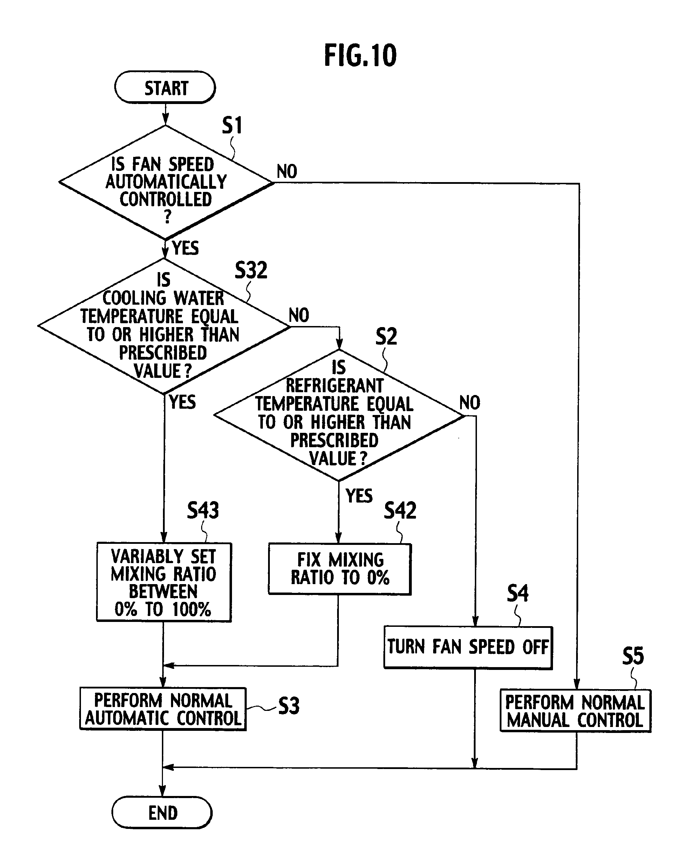

A routine of the blower fan control (6) by the controller 117A will be explained with reference to a flowchart shown in Fig. 10. Here, like step numbers denote like processing as those shown in Fig. 9, and explanation thereof will be omitted.

In the routine of the blower fan control (6), if the automatic control is carried out at step S1, the procedure proceeds to step S32, at which it is determined whether the cooling water temperature detected by the water temperature sensor 121 is equal to or higher than tp3'. If the cooling water temperature is equal to or higher than the cooling water temperature tp3', the procedure proceeds to step S43, at which the mixing ratio is set to a variable value within a range of 0 to 100% and then, the procedure proceeds to step S3, at which the normal automatic control is carried out. In this manner, when the cooling water temperature is relatively high, the mixing ratio is appropriately set according to the cooling water temperature, thereby further swiftly increasing the interior temperature. If the cooling water temperature is lower than tp3' at step S32, the procedure proceeds to step S2, at which it is determined whether the refrigerant temperature detected by the refrigerant temperature sensor 116 is equal to or higher than tp3. If the refrigerant temperature is equal to or higher than tp3, the procedure proceeds to step S42, at which the mixing ratio is fixed to 0% and then, the procedure proceeds to step S3, at which the normal automatic control is carried out. In this manner, when the cooling water temperature is low and the refrigerant temperature is relatively high, the mixing ratio is set to 0% to prevent cool air conditioner wind from hitting the heater core 119, thereby further swiftly increasing the interior temperature. If the refrigerant temperature is lower than tp3 at step S2, the procedure proceeds to step S4, at which the fan speed OFF state is maintained. In this case, uncomfortable cool air is not sent from the vent.

The controller 117A controls the fan speed of the blower fan 107 while proceeding through the steps S 1 to S43.

According to the blower fan control (6), when the cooling water temperature and the refrigerant temperature are low, the fan speed OFF is selected and thus, uncomfortable cool air is not sent out as compared with the conventional technique in which air is sent immediately after the air conditioner is actuated and thus, the blower fan can be controlled appropriately for a driver or the like on the vehicle. Since the mixing ratio is appropriately set according to the cooling water temperature and the refrigerant temperature, it is possible to enhance the rising speed of the interior temperature. Thus, the blower fan can be controlled appropriately for a driver or the like on the vehicle.

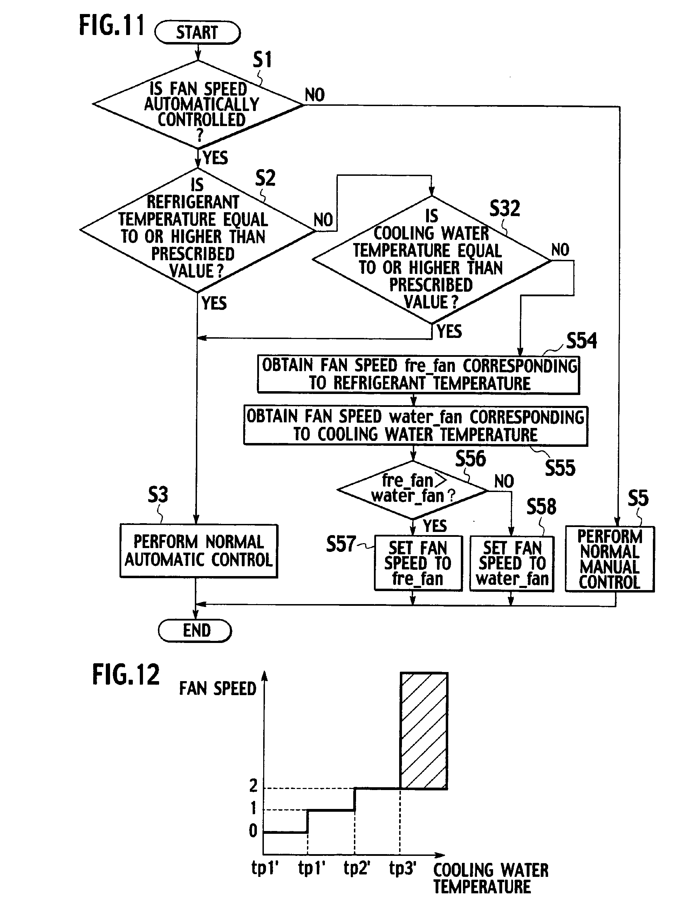

A routine of the blower fan control (7) by the controller 117A will be explained next with reference to a flowchart shown in Fig. 11. Here, like step numbers denote like processing as those shown in Fig. 10, and explanation thereof will be omitted. Fig. 12 is a graph showing a relation between the cooling water temperature and the fan speed.

According to the routine of the blower fan control (7), if the automatic control is carried out at step S 1, the procedure proceeds to step S2, at which it is determined whether the refrigerant temperature detected by the refrigerant temperature sensor 116 is equal to or higher than tp3. If the refrigerant temperature is equal to or higher than the refrigerant temperature tp3, the procedure proceeds to step S3, at which the normal automatic control is carried out. If the refrigerant temperature is lower than the refrigerant temperature tp3 at step S2, the procedure proceeds to step S32, at which it is determined whether the cooling water temperature detected by the water temperature sensor 121 is equal to or higher than tp3'. If the cooling water temperature is equal to or higher than the cooling water temperature tp3', the procedure proceeds to step S3. In this manner, when the refrigerant temperature is equal to or higher than the refrigerant temperature tp3 or when the cooling water temperature is equal to or higher than the cooling water temperature tp3', air conditioner wind of a temperature at which a driver does not feel uncomfortable is sent out, and the blower fan 107 is controlled at a fan speed by the normal automatic control.

If the cooling water temperature is lower than the cooling water temperature tp3' at step S32, the procedure proceeds to step S54, at which a fan speed fre_fan corresponding to the refrigerant temperature detected by the refrigerant temperature sensor 116 is obtained from the graph shown in Fig. 4. The procedure then proceeds to step S55, at which a fan speed water_fan corresponding to the cooling water temperature detected by the water temperature sensor 121 is obtained from the graph shown in Fig. 12. As shown in Fig. 12, the fan speeds 0 to 2 are set in a range of a small air quantity at which a driver or the like does not feel uncomfortable, and the fan speed is set in stages in a range of the cooling water temperatures tp0' to tp3'. That is, the fan speed is set to 0 when the cooling water temperature is tp0' to lower than tp1', the fan speed is set to 1 when the cooling water temperature is tp1' to lower than tp2', and the fan speed is set to 2 when the cooling water temperature is tp2' to lower than tp3', and the blower fan 107 is controlled such that the fan speed becomes equal to the set value.

Next, at step S56, the fan speed fre_fan and the fan speed water_fan are compared with each other to determine which is greater. When the fan speed fre_fan is greater than the fan speed water_fan, the procedure proceeds to step S57, at which the fan speed is set to fre_fan, and the blower fan 107 is controlled such that the fan speed becomes equal to the fre_fan. If the fan speed water_fan is greater than the fan speed fre_fan at step S56, the procedure proceeds to step S58, at which the fan speed is set to water_fan, and the blower fan 107 is controlled such that the fan speed becomes equal to water_fan.

The controller 117A controls the fan speed of the blower fan 107 while proceeding through the steps S1 to S58.

According to the blower fan control (7), even when the refrigerant temperature or the cooling water temperature is low, a small quantity of air is sent so that a driver or the like does not feel uncomfortable. Therefore, uncomfortable cool air is not sent out as compared with the conventional technique in which air is sent immediately after the air conditioner is actuated. Greater one of the fan speed determined according to the refrigerant temperature and the fan speed determined according to the cooling water temperature is employed as the fan speed, so it is possible to further enhance the rising speed of the interior temperature and thus, the blower fan can be controlled more appropriately for a driver or the like on the vehicle.

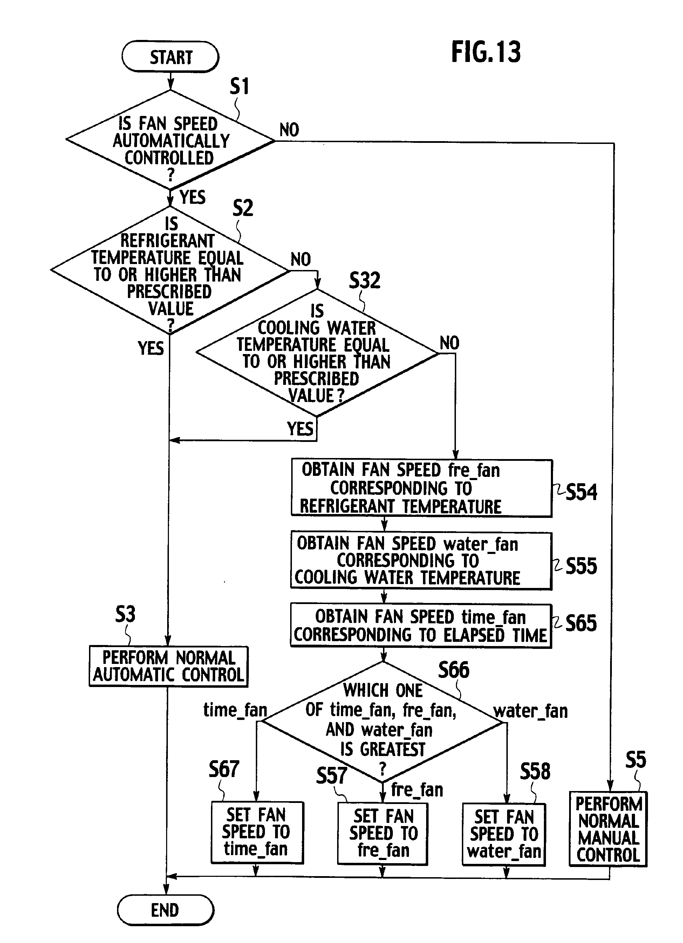

A routine of the blower fan control (8) by the controller 117A will be explained next with reference to a flowchart shown in Fig. 13. Here, like step numbers denote like processing as those shown in Fig. 11, and explanation thereof will be omitted. Fig. 12 is a graph showing a relation between the cooling water temperature and the fan speed.

According to the routine of the blower fan control (8), following step S54 (step of obtaining fan speed fre_fan corresponding to the refrigerant temperature) and step S55 (step of obtaining fan speed water_fan corresponding to the cooling water temperature), the procedure proceeds to step S65, at which fan speed time_fan corresponding to time elapsed after the system startup measured by the timer (not shown) is obtained from the graph shown in Fig. 6 (lateral axis shows time elapsed after the system startup).

Next, at step S66, the fan speed time_fan, the fan speed fre_fan, and the fan speed water_fan are compared with one another to determine which one of them is the greatest. If the fan speed time_fan is the greatest, the procedure proceeds to step S67, at which the fan speed is set to time_fan, and the blower fan 107 is controlled such that the fan speed becomes equal to time_fan. If the fan speed fre_fan is the greatest, the procedure proceeds to step S57, at which the fan speed is set to fre_fan, and the blower fan 107 is controlled such that the fan speed becomes equal to fre_fan. If the fan speed water_fan is the greatest, the procedure proceeds to step S58, at which the fan speed is set to water_fan, and the blower fan 107 is controlled such that the fan speed becomes equal to water_fan.

The controller 117A controls the fan speed of the blower fan 107 while proceeding through the steps S1 to S67.

According to the blower fan control (8), even when the refrigerant temperature or the cooling water temperature is low, a small quantity of air is sent so that a driver or the like does not feel uncomfortable. Therefore, uncomfortable cool air is not sent out as compared with the conventional technique in which air is sent immediately after the air conditioner is actuated, and the fan speed is set to the greatest one of the fan speed determined by the refrigerant temperature, the fan speed determined by the cooling water temperature, and the fan speed determined by time elapsed after the system startup. Therefore, it is possible to further enhance the rising speed of the interior temperature. Thus, the blower fan can be controlled more appropriately for a driver or the like on the vehicle.

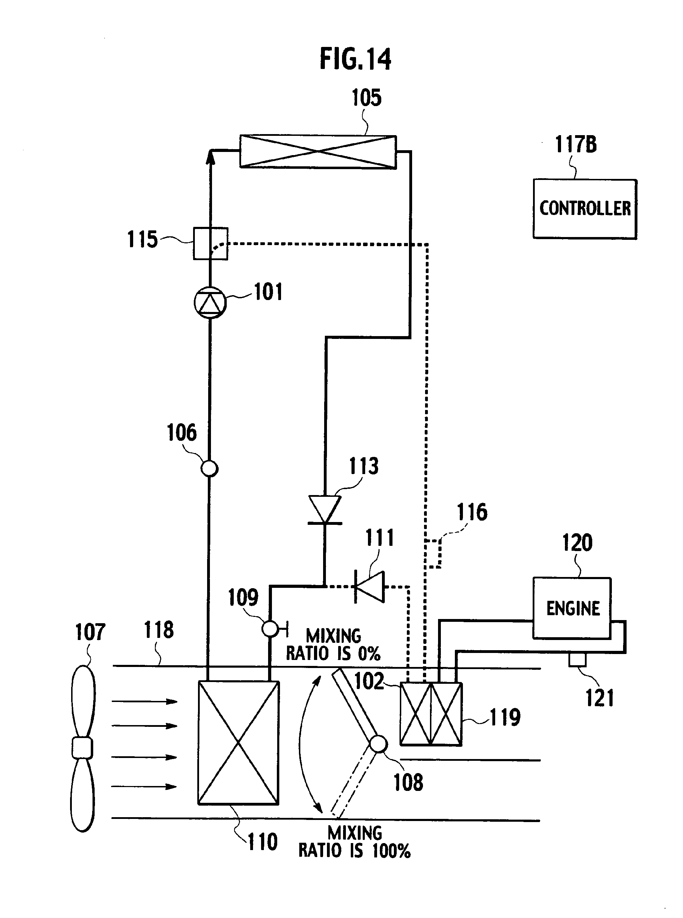

Fig. 14 is a schematic configuration diagram for showing another example of a configuration of an air conditioner for a vehicle to which the blower fan control of the second embodiment can be applied. Like reference signs denote like parts as those shown in Figs. 1 and 8 (however, connection and disposition are partially different).

This embodiment is applied to an engine vehicle, and the engine cooling water and R134a refrigerant are used as the heat sources (however, the refrigerant is not limited to R134a).

According to the air conditioner for a vehicle of the embodiment, the sub-heat exchanger 102 and the heater core 119 are disposed in the air conditioner duct 118. The sub-heat exchanger 102 is used when the heater is started, and the three-way valve 115 is switched when the refrigerant temperature becomes high.

When the heater is started, refrigerant compressed by the compressor 101 is sent to the sub-heat exchanger 102 from the three-way valve 115 through a path shown with broken lines, and air conditioner wind sent from the blower fan 107 is heated by heat exchange. After the refrigerant is decompressed by the expansion valve 109, the refrigerant is sent to the interior heat exchanger 110, and returns into the compressor 101 through the accumulator 106. At the same time, the engine cooling water is sent to the heater core 119 to heat the air conditioner wind. When the heater is started, the mixing ratio of the air mix door 108 is fixed to 100%. Thereafter, if the refrigerant temperature becomes equal to the automatic control temperature, the path from the compressor 101 is switched toward the exterior heat exchanger 105 by the three-way valve 115. At that time, the mixing ratio of the air mix door 108 is set to a variable value within a range of 0 to 100%.

A controller 117B includes a microcomputer including a CPU, a ROM, and a RAM. The controller 117B receives various pieces of data from various sensors such as the refrigerant temperature sensor 116 and the water temperature sensor 121 and from a timer (not shown) periodically or if necessary, performs computation based on programs of the blower fan controls (5), (7), (8) stored in the ROM and based on the various pieces of data, switches the three-way valve 115, and controls the fan speed of the blower fan 107 and the opening degree of the air mix door 108.

According to the air conditioner for a vehicle of the embodiment also, the same effect as that of the second embodiment can be obtained by executing the blower fan controls (5), (7), (8) in the controller 117B.

### INDUSTRIAL APPLICABILITY

According to the present invention, when a refrigerant temperature is low, blow of air into a vehicle interior is limited. Thus, uncomfortable cool air is not sent out as compared with the conventional technique in which air is sent immediately after an air conditioner is actuated.

## Claims

1. An air conditioner for a vehicle that blows air heated by a refrigerant as a heat source into a vehicle interior to heat the vehicle interior, the air conditioner for a vehicle comprising:
a refrigerant temperature detector that detects a temperature of the refrigerant; and
a controller that blows a normal set quantity of air into the vehicle interior when the refrigerant temperature detected by the refrigerant temperature detector reaches a prescribed value, and limits blow of air into the vehicle interior when the refrigerant temperature does not reach the prescribed value.

2. The air conditioner for a vehicle according to claim 1, wherein the controller blows, into the vehicle interior, a small quantity of air determined according to the refrigerant temperature until the refrigerant temperature detected by the refrigerant temperature detector reaches the prescribed value.

3. The air conditioner for a vehicle according to claim 1, wherein the controller blows, into the vehicle interior, a small quantity of air determined according to time elapsed after the air conditioner is actuated, until the refrigerant temperature detected by the refrigerant temperature detector reaches the prescribed value.

4. The air conditioner for a vehicle according to claim 1, wherein the controller blows, into the vehicle interior, greater one of a small quantity of air determined according to the refrigerant temperature and a small quantity of air determined according to time elapsed after the air conditioner is actuated, until the refrigerant temperature detected by the refrigerant temperature detector reaches the prescribed value.

5. An air conditioner for a vehicle that blows, into a vehicle interior, at least one of air heated by a refrigerant as a heat source and air heated by engine cooling water as the heat source to heat the vehicle interior, the air conditioner for a vehicle comprising:
a refrigerant temperature detector that detects a temperature of the refrigerant;
a cooling water temperature detector that detects a temperature of the cooling water; and
a controller that blows a normal set quantity of air into the vehicle interior when one of the refrigerant temperature detected by the refrigerant temperature detector and the cooling water temperature detected by the cooling water temperature detector reaches a prescribed value, and that, when both the refrigerant temperature and the cooling water temperature do not reach the prescribed value, limits blow of air into the vehicle interior until one of the refrigerant temperature and the cooling water temperature reaches the prescribed value.

6. The air conditioner for a vehicle according to claim 5, wherein when the cooling water temperature detected by the cooling water temperature detector reaches the prescribed value, the controller blows the normal set quantity of air into the vehicle interior in a state in which a ratio at which the cooling water is used as a heat source is variable, and when only the refrigerant temperature detected by the refrigerant temperature detector reaches the prescribed value, the controller blows the normal set quantity of air into the vehicle interior in a state in which a ratio at which the cooling water is used as the heat source is zero, and when both the cooling water temperature and refrigerant temperature do not reach the prescribed value, the controller limits blow of air into the vehicle interior until one of the cooling water temperature and refrigerant temperature reaches the prescribed value.

7. The air conditioner for a vehicle according to claim 5, wherein the controller blows, into the vehicle interior, greater one of a small quantity of air determined according to the refrigerant temperature and a small quantity of air determined according to the cooling water temperature when both of the cooling water temperature detected by the cooling water temperature detector and the refrigerant temperature detected by the refrigerant temperature detector do not reach the prescribed value.

8. The air conditioner for a vehicle according to claim 5, wherein the controller blows, into the vehicle interior, the greatest one of a small quantity of air determined according to the refrigerant temperature detected by the refrigerant temperature detector, a small quantity of air determined according to the cooling water temperature detected by the cooling water temperature detector, and a small quantity of air determined according to time elapsed after the air conditioner is actuated, when both of the cooling water temperature and the refrigerant temperature do not reach the prescribed value.
